# EUROPEAN PATENT APPLICATION

(11) **EP 4 498 470 A1**
(43) Date of publication of application: **29.01.2025**
(21) Application number: 23774684.7
(22) Date of filing: 15.03.2023
(51) Int. Cl.: H01M 10/0587, H01M 4/13, H01M 4/64, H01M 10/0566

(54) **NON-AQUEOUS ELECTROLYTE SECONDARY BATTERY**

(30) Priority: 22.03.2022 JP 2022045012
(71) Applicant: Panasonic Energy Co., Ltd., Osaka 570-8511 (JP)
(72) Inventor: NAKAI, Yuki, Kadoma-shi, Osaka 571-0057 (JP); HASHIMOTO, Tetsu, Kadoma-shi, Osaka 571-0057 (JP)
(74) Representative: Novagraaf International SA
(86) International application number: PCT/JP2023/009994
(87) International publication number: WO 2023/182087

(57) **Abstract**

This non-aqueous electrolyte secondary battery includes: a wound electrode body in which a positive electrode plate and a negative electrode plate (12) are wound with a separator (13) interposed therebetween; and an outer package can containing the electrode body. The negative electrode plate (12) includes a negative electrode core body (12a), and a negative electrode mixture layer (12b) formed on the surface of the negative electrode core body. At an end portion of the negative electrode core body on one side in an electrode plate width direction there is formed a core body exposed portion along the longitudinal direction of the electrode plate, the core body exposed portion being electrically connected to the outer package can. The surface of the negative electrode core body includes a first region (A1) other than the end portion on the one side in the electrode plate width direction, and a second region (A2) that is the end portion on the one side. The relationship Ra1 > Ra2 holds, where Ra1 represents the arithmetic average roughness of the first region, and Ra2 represents the arithmetic average roughness of the second region.

## Description

### TECHNICAL FIELD

The present disclosure relates to a non-aqueous electrolyte secondary battery.

### BACKGROUND ART

Cylindrical non-aqueous electrolyte secondary batteries such as lithium ion batteries have been conventionally known which comprise an electrode assembly having a positive electrode plate and a negative electrode plate wound together with a separator interposed therebetween and an exterior can that houses the electrode assembly and an electrolyte solution. In this type of secondary batteries, a current collector tab fused to a part in the electrode-plate longitudinal direction of a core made of a metal foil of a negative electrode plate is connected to an exterior can which serves as a negative electrode terminal. On the other hand, there is recently known a configuration in which the current collector tab connected to the negative electrode plate is eliminated and a core exposed portion provided along the electrode-plate longitudinal direction on an end in the electrode-plate width direction of the negative electrode plate is electrically connected to the exterior can (see Patent Literature 1). It is described that this configuration can change the maximum distance of current flow through the electrode plate from the conventional distance between an end in the electrode-plate longitudinal direction and the current collector tab into the height of the electrode plate and therefore the resistance can be reduced.

### CITATION LIST

### PATENT LITERATURE

PATENT LITERATURE 1: US Serial No. 2020/0144676

### SUMMARY

According to the configuration disclosed in Patent Literature 1, it is required to coat the negative electrode core with negative electrode mixture slurry so as to form the core exposed portion on the end portion in the electrode-plate width direction of the negative electrode plate when. On the other hand, for improvement in ease of coating with the negative electrode mixture slurry, it is conceivable to employ a secondary battery according to a comparative example in which the surface of the negative electrode core is made hydrophilic in the same configuration as that disclosed in the Patent Literature 1.

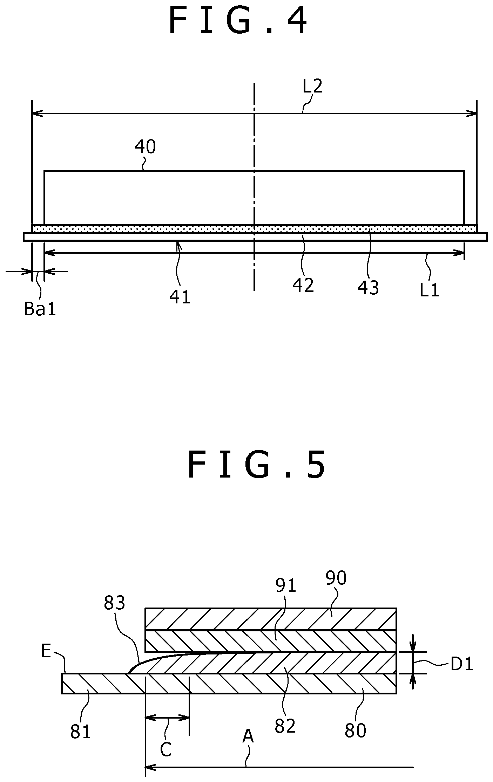

FIG. 5 is a schematic enlarged sectional view of an electrode assembly of the comparative example, in which sagging of the negative electrode mixture is illustrated. Since the negative electrode core is made hydrophilic, the negative electrode mixture slurry readily spreads on the surface of a negative electrode core 81 at the time of coating. This entails a risk of causing sagging 83 of the negative electrode mixture slurry which protrudes toward an end E in the electrode-plate width direction beyond the end of an planned coating area A for a negative electrode mixture layer 82 on a negative electrode plate 80, which area is to be opposed to a positive electrode mixture layer 91 of a positive electrode plate 90 with a separator (not illustrated) interposed therebetween. In the case where the sagging 83 is generated, a thin portion (the part of the area indicated by an arrow C in FIG. 5) which has a thickness smaller than a proper thickness D1 of the negative electrode mixture layer and is to be opposed to the positive electrode plate 90 with the separator interposed therebetween is formed at the end portion in the electrode-plate width direction of the negative electrode plate 80. This causes a risk of precipitation of Li, due to the excessive positive electrode mixture with respect to the negative electrode mixture.

On the other hand, it is conceivable to reduce the hydrophilicity of the entire surface of the negative electrode core 81 in order to prevent generation of the sagging 83. However, this may reduce the adherence between the negative electrode mixture layer 82 and the negative electrode core 81, possibly leading to deterioration in peeling strength of the negative electrode mixture layer 82 with respect to the negative electrode core 81.

It is an advantage of the non-aqueous electrolyte secondary battery according to the present disclosure to prevent sagging of a negative electrode mixture and to improve the peeling strength of a negative electrode mixture layer with respect to a negative electrode core, in a configuration where a core exposed portion is formed along the electrode-plate longitudinal direction on an end portion in the electrode-plate width direction of a negative electrode plate.

A non-aqueous electrolyte secondary battery according to the present disclosure comprises: a wound-type electrode assembly including a belt-shaped positive electrode plate and a belt-shaped negative electrode plate wound together with a separator interposed between the positive and negative electrode plates; and an exterior can that houses the electrode assembly and a non-aqueous electrolyte solution, wherein the negative electrode plate includes: a negative electrode core; and a negative electrode mixture layer provided on a surface of the negative electrode core, an end portion on one side in an electrode-plate width direction of the negative electrode core is provided with a core exposed portion along an electrode-plate longitudinal direction, the core exposed portion is electrically connected to the exterior can, the surface of the negative electrode core includes a first area being an area other than the end portion on the one side in the electrode-plate width direction, and a second area being an area of the end portion on the one side, and Ra1 > Ra2 is satisfied, where Ra1 represents an arithmetic mean roughness of the first area, and Ra2 represents an arithmetic mean roughness of the second area.

With the non-aqueous electrolyte secondary battery according to the present disclosure, sagging of the negative electrode mixture can be prevented and the peeling strength of the negative electrode mixture layer with respect to the negative electrode core can be improved, in the configuration where the core exposed portion is provided along the electrode-plate longitudinal direction on the end portion in the electrode-plate width direction of the negative electrode plate.

### BRIEF DESCRIPTION OF DRAWING

FIG. 1 is an axial sectional view of an exemplary non-aqueous electrolyte secondary battery according to an embodiment.
FIG. 2 is a partially-developed perspective view of an electrode assembly included in the exemplary non-aqueous electrolyte secondary battery according to the embodiment for explanation of the structure.
FIG. 3 is a schematic developed view for explanation of a first area and a second area having different arithmetic mean roughnesses on the surface of a negative electrode core according to the embodiment.
FIG. 4 is a side view illustrating a method of coating the negative electrode core of an experimental example with negative electrode mixture slurry with a coating machine, for confirmation of effects of the embodiment.
FIG. 5 is a schematic enlarged sectional view of an electrode assembly of a comparative example, in which sagging of a negative electrode mixture is illustrated.

### DESCRIPTION OF EMBODIMENT

An embodiment according to the present invention will be described in detail below with reference to the accompanying drawings. In the following description, specific shapes, materials, numeral values, directions, and the like are merely examples for facilitating understanding of the present invention, and thus can be appropriately changed in conformity with the specification of the non-aqueous electrolyte secondary battery. In addition, a word "almost" as used hereinafter includes, for example, the case of completely the same and also the case of being regarded as substantially the same. Furthermore, in the case where a plurality of embodiments or modifications are included below, it is assumed from the beginning that characteristic portions thereof are employed in appropriate combinations.

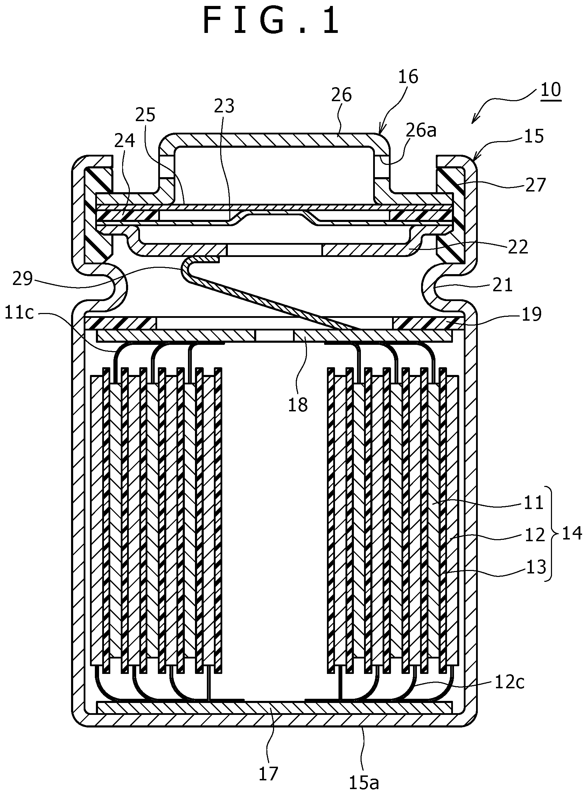

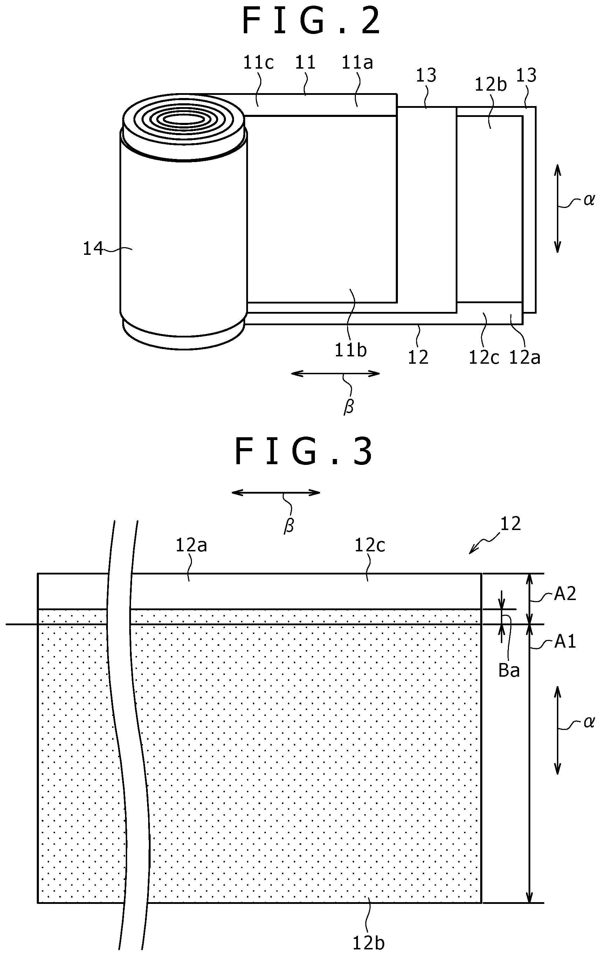

FIG. 1 is an axial sectional view of a non-aqueous electrolyte secondary battery 10 according to an embodiment. FIG. 2 is a partially-developed perspective view of an electrode assembly 14 included in the non-aqueous electrolyte secondary battery 10 for explanation of the structure. As illustrated in FIG. 1, the non-aqueous electrolyte secondary battery 10 comprises a wound-type electrode assembly 14, a non-aqueous electrolyte (not illustrated), an exterior can 15, and a sealing assembly 16. Hereinafter, the non-aqueous electrolyte secondary battery 10 may be simply referred to as a secondary battery 10.

The wound-type electrode assembly 14 includes a belt-shaped positive electrode plate 11, a belt-shaped negative electrode plate 12, and a belt-shaped separator 13, and the positive electrode plate 11 and the negative electrode plate 12 are spirally wound together with the separator 13 interposed therebetween. Hereinafter, one side in the axial direction of the electrode assembly 14 may be referred to as "top", and the other side in the axial direction may be referred to as "bottom". The non-aqueous electrolyte contains a non-aqueous solvent and an electrolyte salt dissolved in the non-aqueous solvent. The non-aqueous electrolyte is not limited to a liquid electrolyte, and may be a solid electrolyte containing a gelled polymer or the like.

With reference to FIG. 2, the positive electrode plate 11 protrudes upward with respect to the negative electrode plate 12 and the separator 13, whereas the negative electrode plate 12 protrudes downward with respect to the positive electrode plate 11 and the separator 13. The positive electrode plate 11 has a positive electrode core exposed portion 11c in which a positive electrode mixture layer 11b is not provided, on an upper end portion corresponding to the end portion on one side in an electrode-plate width direction of a positive electrode core 11a, over the entire length of the electrode plate along an electrode-plate longitudinal direction β.

In addition, the negative electrode plate 12 has a negative electrode core exposed portion 12c in which a negative electrode mixture layer 12b is not provided, on a lower end portion corresponding to the end portion on the one side in the electrode-plate width direction α of a negative electrode core 12a, over the entire length of the electrode plate along the electrode-plate longitudinal direction. Accordingly, the positive electrode core exposed portion 11c serves as the upper end portion of the electrode assembly 14, whereas the negative electrode core exposed portion 12c serves as the lower end portion of the electrode assembly 14.

The non-aqueous electrolyte contains a non-aqueous solvent and an electrolyte salt dissolved in the non-aqueous solvent. Examples of the non-aqueous solvent include, for example, esters, ethers, nitriles, amides, a mixed solvent containing two or more thereof, and the like. The non-aqueous solvent may contain a halogen-substituted product thereof obtained by at least partially substituting hydrogen atoms of such a solvent with halogen atoms such as fluorine. Note that the non-aqueous electrolyte is not limited to a liquid electrolyte, and may be a solid electrolyte containing a gelled polymer or the like. Examples of the electrolyte salt include lithium salts such as LiPF₆.

The positive electrode plate 11 includes the positive electrode core 11a and the positive electrode mixture layer 11b formed on both sides of the positive electrode core 11a. Examples of materials for the positive electrode core 11a include a metal foil made of aluminum, an aluminum alloy or the like which is stable within the range of the electric potential of the positive electrode plate 11, and a film provided with such a metal on the surface layer.

The positive electrode mixture layer 11b preferably contains a positive electrode active material, a conductive agent, and a binding agent. The positive electrode plate 11 is produced by applying positive electrode mixture slurry containing a positive electrode active material, a conductive agent, a binding agent, and a solvent such as N-methyl-2-pyrrolidone (NMP) on the both sides of the positive electrode core 11a, followed by drying and rolling.

Examples of the positive electrode active material include lithium-containing transition metal oxides that contain a transition metal atom such as Co, Mn, and Ni. The lithium-containing transition metal oxides are not limited, but are preferably composite oxides represented by a general formula Li₁₊ₓMO₂ (where -0.2 < x ≤ 0.2, and M contains at least one of the group consisting of Ni, Co, Mn, and Al).

Examples of the conductive agent include carbon materials including carbon blacks (CB) such as acetylene black (AB) and ketjen black, graphite, and the like. Examples of the binding agent include fluorine resins such as polytetrafluoroethylene (PTFE) and polyvinylidene difluoride (PVdF), polyacrylonitrile (PAN), polyimide (PI), acrylic resins, polyolefin resins, and the like. The above resins and carboxy methyl cellulose (CMC) or a salt thereof, polyethylene oxide (PEO), or the like may be used together. These materials may be used alone or in combination of two or more thereof.

The negative electrode plate 12 includes the negative electrode core 12a and the negative electrode mixture layer 12b formed on both sides of the negative electrode core 12a. Examples of materials for the negative electrode core 12a include a metal foil made of copper or the like, and a film provided with such a metal on the surface layer.

FIG. 3 is a schematic developed view for explanation of a first area A1 and a second area A2 having different arithmetic mean roughnesses on the surface of the negative electrode core 12a according to the embodiment. The surface on each side of the negative electrode core 12a includes the first area A1 being an area other than the end portion on one side in the electrode-plate width direction δ (other than the lower end portion in FIG. 2 and other than the upper end portion in FIG. 3) and the second area A2 being an area of the end portion on the one side in the electrode-plate width direction. Since the end portion on the one side in the electrode-plate width direction of the negative electrode plate 12 is provided with the negative electrode core exposed portion 12c as described above, the second area A2 corresponds to the end portion on the side of the negative electrode core exposed portion. In FIG. 4, the dotted area shows the negative electrode mixture layer 12b. In the example in FIG. 4, the negative electrode mixture layer 12b slightly protrudes into the second area A2 from the first area A1. A length of Ba of the protruding portion in the electrode-plate width direction α indicates a sagging width being the length of the protruding portion with respect to the planned coating portion for the negative electrode mixture layer 12b.

When the arithmetic mean roughness of the first area A1 is represented by Ra1 and the arithmetic mean roughness of the second area A2 is represented by Ra2, Ra1 > Ra2 is satisfied. Ra1 and Ra2 preferably satisfy a relation of Ra1/Ra2 ≥ 1.2. Furthermore, Ra1 and Ra2 preferably satisfy a relation of Ra1/Ra2 ≤ 2.0. This configuration can prevent sagging of the negative electrode mixture and improve the peeling strength of the negative electrode mixture layer 12b with respect to the negative electrode core 12a, in the configuration where the negative electrode core exposed portion 12c is provided along the electrode-plate longitudinal direction β on the end portion in the electrode-plate width direction of the negative electrode plate 12. This will be described later in detail.

The negative electrode mixture layer 12b preferably contains a negative electrode active material and a binding agent. The negative electrode plate 12 is produced by applying negative electrode mixture slurry containing, for example, a negative electrode active material, a binding agent, water, and the like on the both sides of the negative electrode core 12a, followed by drying and rolling.

Examples of the negative electrode active material are not limited as long as it can reversibly occlude and release lithium ions, and include carbon materials such as natural graphite and artificial graphite, Si, metals which can be made into an alloy with lithium such as Sn, or alloys containing them, composite oxides, and the like. Examples of the binding agent contained in the negative electrode mixture layer 12b include the resins exemplified for the positive electrode plate 11. In the case where the negative electrode mixture slurry is prepared with use of an aqueous solvent, styrene-butadiene rubber (SBR), CMC or a salt thereof, polyacrylic acid or a salt thereof, polyvinyl alcohol, or the like can be used. These materials may be used alone or in combination of two or more thereof.

The separator 13 is formed of a porous sheet having ion-permeability and an insulating property. Examples of the porous sheet include microporous thin films, woven fabrics, nonwoven fabrics, and the like. The separator 13 is preferably made of an olefin resin such as polyethylene and polypropylene. The thickness of the separator 13 is, for example, 10 µm to 50 µm. The thickness of the separator 13 tends to be small in view of improvement in capacity and power of the battery. The separator 13 has a melting point of about, for example, 130°C to 180°C.

In the example illustrated in FIG. 1, the exterior can 15 and the sealing assembly 16 constitute a metal battery case that houses the electrode assembly 14 and the non-aqueous electrolyte. A lower current collector plate 17 is provided on the lower side of the electrode assembly 14, whereas an upper current collector plate 18 is provided on the upper side of the electrode assembly 14.

Specifically, the secondary battery 10 includes the lower current collector plate (negative electrode current collector plate) 17 made of metal, such as nickel, a nickel alloy or the like, on the exterior (bottom) side in the axial direction of the electrode assembly 14. The negative electrode core exposed portion 12c of the electrode assembly 14 is joined to the disk-shaped lower current collector plate 17, and the lower current collector plate 17 is joined to the inside surface of a bottom plate portion 15a of the exterior can 15.

Before the electrode assembly 14 is placed in the exterior can 15, the lower current collector plate 17 is externally irradiated with laser light while the negative electrode core exposed portion 12c is pressed onto a surface that serves as the upper surface of the lower current collector plate 17, whereby the negative electrode core exposed portion 12c is joined to the lower current collector plate 17. Subsequently, the electrode assembly 14 and the lower current collector plate 17 are placed in the exterior can 15, and the bottom plate portion 15a of the exterior can 15 is externally irradiated with laser light toward the bottom surface at the center of the lower current collector plate 17, whereby the lower current collector plate 17 is joined to the inside surface of the bottom plate portion 15a. In this way, the negative electrode core exposed portion 12c is electrically connected to the exterior can 15.

On the other hand, the secondary battery 10 includes the upper current collector plate 18 (positive electrode current collector plate) made of metal, such as aluminum, an aluminum alloy or the like, on the exterior (top) side in the axial direction of the electrode assembly 14, and includes an annular insulating plate 19 on the top side thereof in the axial direction. The upper current collector plate 18 has a shape of a disk having a through hole at the center.

The positive electrode core exposed portion 11c of the electrode assembly 14 is joined by laser welding to the lower surface of the upper current collector plate 18 in the same method as that for joining the negative electrode core exposed portion 12c. Specifically, before the electrode assembly 14 is placed in the exterior can 15, the upper current collector plate 18 is externally irradiated with laser light while the positive electrode core exposed portion 11c is pressed onto a surface that serves as the lower surface of the upper current collector plate 18, whereby the positive electrode core exposed portion 11c is joined to the upper current collector plate 18.

The secondary battery 10 further comprises the sealing assembly 16 and a connection lead 29 that is made of metal, such as aluminum, an aluminum alloy or the like. The lower end portion of the connection lead 29 is joined to the upper surface of the upper current collector plate 18 by welding or the like. The connection lead 29 extends through the through hole of the insulating plate 19 toward the sealing assembly 16, and the upper end portion of the connection lead 29 is connected to the lower surface of a filter 22 which serves as a bottom plate of the sealing assembly 16 by welding or the like. A terminal plate 26 that serves as a top plate of the sealing assembly 16 is electrically connected to the filter 22, and the terminal plate 26 serves as a positive electrode terminal. In addition, the exterior can 15 to which the negative electrode core exposed portion 12c is connected via the lower current collector plate 17 serves as a negative electrode terminal.

The secondary battery 10 further comprises a gasket 27 made of a resin, which is placed between the exterior can 15 and the sealing assembly 16. The gasket 27 is sandwiched by the exterior can 15 and the sealing assembly 16, and insulates the sealing assembly 16 from the exterior can 15. The gasket 27 has a role of a sealing member for keeping the inside of the battery airtight and a role of an insulating member for insulating the exterior can 15 and the sealing assembly 16 from each other. The exterior can 15 has an annular grooved portion 21 on a part in the axial direction.

The grooved portion 21 is formed by, for example, processing the side wall of a tubular portion 15b of the exterior can 15 by spinning toward the inner side in the radial direction, and thereby denting the side wall toward the radially inner side. The upper surface of the grooved portion 21 supports the sealing assembly 16. The sealing assembly 16 seals the opening of the exterior can 15.

The sealing assembly 16 includes the filter 22, a lower valve member 23, an insulating member 24, an upper valve member 25, and the terminal plate 26 layered in order from the side of the electrode assembly 14. The constituents of the sealing assembly 16 each has a disk shape or a ring shape, for example, and the constituents other than the insulating member 24 are electrically connected to each other. The central portions of the lower valve member 23 and the upper valve member 25 are connected, and the insulating member 24 is interposed between the peripheral portions thereof.

In case of inner pressure rise in the secondary battery 10 due to an abnormal heat generation, the lower valve member 23 is broken, for example, which causes the upper valve member 25 to swell toward the terminal plate 26 and separate from the lower valve member, thereby the electrical connection therebetween is cut off. In case of further inner pressure rise, the upper valve member 25 is broken and gas is discharged through an opening 26a of the terminal plate 26. Since the gas is discharged, an explosion of the secondary battery 10 due to an excessive inner pressure rise in the secondary battery 10 can be prevented.

According to the non-aqueous electrolyte secondary battery 10 described above, the surfaces on the both sides of the negative electrode core 12a include the first area A1 being an area other than the end portion on the one side in the electrode-plate width direction, and include the second area A2 being an area of the end portion on the one side in the electrode-plate width direction, which is the end portion on the side of the negative electrode core exposed portion. In addition, when the arithmetic mean roughness of the first area A1 is represented by Ra1 and the arithmetic mean roughness of the second area A2 is represented by Ra2, Ra1 > Ra2 is satisfied. With this configuration, the planned coating portion and the planned non-coating portion for the negative electrode mixture slurry on the negative electrode core 12a are caused to be differ from each other in wettability, that is, spreadability of liquid, such that the planned non-coating portion has less wettability.

The wettability with respect to liquid on the surface of the negative electrode core 12a depends on the surface roughness. That is, there is such a tendency that the lower the surface roughness, the lower the wettability because the specific surface area in which the liquid is brought into contact with the surface is reduced, and the higher the surface roughness, the higher the wettability. In the configuration according to the present disclosure, this characteristic is utilized and thus the first area A1 being the planned coating portion and the second area A2 being the planned non-coating portion are caused to be differ from each other in surface roughness. Specifically, the first area A1 is caused to have a high surface roughness in order that only the first area A1 being the planned coating portion, to which the negative electrode mixture slurry is required to closely adhere, has a high wettability. Besides, the second area A2 is caused to have a lower surface roughness than the first area A1 in order that the second area A2 being the planned non-coating portion, on which the negative electrode mixture slurry is to be prevented from spreading, has a low wettability. Accordingly, sagging of the negative electrode mixture can be prevented by prevention of spreading of the negative electrode mixture slurry on the second area A2, and at the same time, the peeling strength of the negative electrode mixture layer 12b with respect to the negative electrode core 12a in the first area A1 can be increased. Although FIG. 3 shows a sagging width Ba corresponding to the length of the protruding portion beyond the planned coating portion for the negative electrode mixture layer 12b on the negative electrode plate 12 as described above, the sagging width Ba can be reduced or eliminated according to the present embodiment.

For this reason, the thickness of the portion of the negative electrode mixture layer 12b of the negative electrode plate 12 opposing to the positive electrode plate 11 is prevented from being reduced compared to the proper thickness, and therefore the positive electrode can be prevented from being excessive with respect to the negative electrode mixture.

Furthermore, when Ra1 and Ra2 satisfy a relationship of Ra1/Ra2 ≥ 1.2, the difference in surface roughness between the first area A1 and the second area A2 is large, and accordingly, the prevention of sagging of the negative electrode mixture and the improvement in peeling strength of the negative electrode mixture layer 12b with respect to the negative electrode core 12a are both achieved remarkably.

The inventors of the present disclosure produced four negative electrode plates in total on the following conditions shown in Table 1, including Experimental Example 1 corresponding to the negative electrode plate 12 according to the embodiment and Experimental Examples 2 to 4 corresponding to the comparative example, and then produced test pieces by cutting the negative electrode plates, and evaluated them regarding the sagging width Ba in the planned non-coating portion for the negative electrode mixture on each negative electrode plate 12 and the peeling strength of the negative electrode mixture layer.

**[Table 1]**

| | Arithmetic mean roughness Ra | | Contact angle (degrees) | | Sagging width (mm) | Peeling strength (Electrode plate adherence) |
|---|---|---|---|---|---|---|
| | Second area | First area | Second area | First area | | |
| Experimental Example 1 | 0.18 | 0.26 | 73 | 42 | 1.7 | 7.37 |
| | | | | | | |
| Experimental Example 2 | 0.18 | 0.18 | 73 | 73 | 1.7 | 6.03 |
| | | | | | | |
| Experimental Example 3 | 0.26 | 0.26 | 42 | 42 | 2.0 | 7.37 |
| | | | | | | |
| Experimental Example 4 | 0.26 | 0.18 | 42 | 73 | 2.0 | 6.03 |
| | | | | | | |

### [Experimental Example 1]

In Experimental Example 1, there was produced an electrodeposited copper foil having an arithmetic mean roughness Ra2 of the second area A2 being the planned non-coating portion of 0.18 and an arithmetic mean roughness Ra1 of the first area A1 being the planned coating portion of 0.26 as the negative electrode core, as shown in Table 1. Hence, Ra1/Ra2 = 1.44 was satisfied.

### [Measurement of Surface Roughness]

The measurement of surface roughness of Experimental Example 1 was performed with use of the following equipment and on the following measurement conditions.
· Apparatus: Surface roughness measuring instrument SJ-210 manufactured by Mitutoyo Corporation (0.75 mN type)
· Stylus diameter: 2.0 µm
· Conforming to standard: JIS B 0601 (1994)
· Measurement length: 4.0 mm
· Cut-off value: 0.8 mm
· Measurement direction: Vertical direction with respect to electrode-plate longitudinal direction being electrode-plate winding direction

### [Measurement of Contact Angle (Evaluation of Wettability)]

The measurement of contact angle of Experimental Example 1 was performed with use of the following equipment.
· Apparatus: DMs-401 manufactured by Kyowa Interface Science Co., Ltd · Solvent used: Pure water
· Needle used: Gauge 22G, Needle tip 90 degrees

The above equipment was used to measure the contact angles for the first area A1 and the second area A2 in the following procedure.
(1) A camera and a negative electrode core (copper foil) were set such that the angle can be confirmed in the vertical direction with respect to the electrode-plate longitudinal direction being the electrode-plate winding direction.
(2) 1.5 µL of pure water was added dropwise to each of the first area A1 and the second area A2 from a syringe.
(3) The contact angles on both end portions were measured immediately after the droplet reached on the surface.

### [Production of Negative Electrode Mixture Slurry]

The negative electrode mixture slurry was produced in the following procedure. A mixture of 95 pts.mass of graphite powder and 5 pts.mass of silicon oxide was used as the negative electrode active material. Subsequently, 100 pts.mass of the negative electrode active material, 1.2 pts.mass of styrene-butadiene rubber (SBR) as a binder, and 1 pt.mass of carboxy methyl cellulose (CMC) as a thickener were mixed. The mixture was dispersed in water, thereby preparing the negative electrode mixture slurry.

### [Sagging Width Evaluation Test]

FIG. 4 is a side view illustrating a method of coating a negative electrode core 42 of the experimental example with the negative electrode mixture slurry with a coating machine 40. The negative electrode core 42 of Experimental Example 1 was coated with the negative electrode mixture slurry, which was produced as described above, with the coating machine (die coater) 40 with the coating end of the coating machine 40 aligned with the boundary between the planned coating portion and the planned non-coating portion, followed by drying, thereby a negative electrode plate 41 having a negative electrode mixture layer 43 was produced.

Subsequently, the sagging width Ba1 was calculated for each side of the negative electrode core 42 from the difference between the width of a slurry ejector of the coating machine 40 (planned coating width) L1 and an actual coating width L2. Specifically, the width was calculated as follows: (sagging width Ba1) = {(actual coating width L2) - (planned coating width L1)}/2.

### [Peeling Strength Test]

The peeling strength of the negative electrode mixture layer 43 with respect to the negative electrode core 42 was evaluated in the following procedure. In the peeling strength test, Tensilon universal testing machine RTC1210 manufactured by A&D Company, Ltd. was used.
(1) The negative electrode plate 41 was cut into a test piece having a width of 15 mm and a length of 80 mm.
(2) Double-sided adhesive tape was attached to the negative electrode mixture layer 43 on one surface of the test piece, and then the test piece was fixed on a stainless-steel substrate having a smooth surface.
(3) The stainless-steel substrate with the test piece fixed thereon was set horizontally.
(4) One end of the negative electrode core 42 in the longitudinal direction of the test piece was fixed to a movable jig of the universal testing machine, and then the machine was set so as to peel the negative electrode mixture layer 43 which is dried in a direction of 90° with respect to the surface of the stainless-steel substrate.
(5) The negative electrode mixture layer 43 was peeled from the negative electrode core 42 at a speed of 20 mm/min.
(6) The numeral value of the maximum tensile strength when the negative electrode mixture layer 43 of the test piece was peeled off by a length greater than or equal to 30 mm was read, and the peeling strength (N/m) was calculated.

### [Experimental Example 2]

In Experimental Example 2, there was produced an electrodeposited copper foil having arithmetic mean roughnesses Ra2 and Ra1 of the second area A2 and the first area A1, respectively, of 0.18 as the negative electrode core, as shown in Table 1. Hence, Ra1/Ra2 = 1.00 was satisfied. In Experimental Example 2, the other configurations and conditions were the same as those of Experimental Example 1.

### [Experimental Example 3]

In Experimental Example 3, there was produced an electrodeposited copper foil having arithmetic mean roughnesses Ra2 and Ra1 of the second area A2 and the first area A1, respectively, of 0.26 as the negative electrode core, as shown in Table 1. Hence, Ra1/Ra2 = 1.00 was satisfied. In Experimental Example 3, the other configurations and conditions were the same as those of Experimental Example 1.

### [Experimental Example 4]

In Experimental Example 4, there was produced an electrodeposited copper foil having an arithmetic mean roughness Ra2 of the second area A2 of 0.26 and an arithmetic mean roughness Ra1 of the first area A1 of 0.18 as the negative electrode core, as shown in Table 1. Hence, Ra1/Ra2 = 0.69 was satisfied. In Experimental Example 4, the other configurations and conditions were the same as those of Experimental Example 1.

### [Test Result]

Table 1 shows experimental results regarding the sagging width Ba and the peeling strength of the respective experimental examples. It can be seen from experimental results shown in Table 1 that, in Experimental Example 2 corresponding to the comparative example, the reduced arithmetic mean roughnesses Ra1 and Ra2 of 0.18 in both the first and second areas A1 and A2 of the negative electrode core reduced the sagging width Ba, but also reduced the peeling strength of the negative electrode mixture layer.

In Experimental Example 3 corresponding to another comparative example, the increased arithmetic mean roughnesses Ra1 and Ra2 of 0.26 in both the first and second areas A1 and A2 increased the peeling strength of the negative electrode mixture layer, but also increased the sagging width Ba. In Experimental Example 4 corresponding to another comparative example, the arithmetic mean roughness Ra1 of the first area A1 smaller than the arithmetic mean roughness Ra2 of the second area A2 increased the sagging width Ba, and reduced the peeling strength of the negative electrode mixture layer.

On the other hand, it can be confirmed from experimental results shown in Table 1 that, in Experimental Example 1 corresponding to the embodiment, the arithmetic mean roughness Ra1 of the first area A1 higher than the arithmetic mean roughness Ra2 of the second area A2 reduced the sagging width Ba and, at the same time, increased the peeling strength of the negative electrode mixture layer.

10 Non-aqueous electrolyte secondary battery (secondary battery), 11 Positive electrode plate, 11a Positive electrode core, 11b Positive electrode mixture layer, 11c Positive electrode core exposed portion, 12 Negative electrode plate, 12a Negative electrode core, 12b Negative electrode mixture layer, 12c Negative electrode core exposed portion, 13 Separator, 14 Electrode assembly, 15 Exterior can, 15a Bottom plate portion, 15b Tubular portion, 16 Sealing assembly, 17 Lower current collector plate, 18 Upper current collector plate, 19 Insulating plate, 21 Grooved portion, 22 Filter, 23 Lower valve member, 24 Insulating member, 25 Upper valve member, 26 Terminal plate, 27 Gasket, 29 Connection lead, 40 Coating machine, 41 Negative electrode plate, 42 Negative electrode core, 43 Negative electrode mixture layer, 80 Negative electrode plate, 81 Negative electrode core, 82 Negative electrode mixture layer, 83 Sagging, 90 Positive electrode plate, 91 Positive electrode mixture layer.

## Claims

1. A non-aqueous electrolyte secondary battery, comprising:
a wound-type electrode assembly including a belt-shaped positive electrode plate and a belt-shaped negative electrode plate wound together with a separator interposed between the positive and negative electrode plates; and
an exterior can that houses the electrode assembly and a non-aqueous electrolyte solution, wherein
the negative electrode plate includes:
a negative electrode core; and
a negative electrode mixture layer provided on a surface of the negative electrode core,
an end portion on one side in an electrode-plate width direction of the negative electrode core is provided with a core exposed portion along an electrode-plate longitudinal direction,
the core exposed portion is electrically connected to the exterior can,
the surface of the negative electrode core includes a first area that is an area other than the end portion on the one side in the electrode-plate width direction, and a second area that is an area of the end portion on the one side, and
Ra1 > Ra2 is satisfied, where Ra1 represents an arithmetic mean roughness of the first area, and Ra2 represents an arithmetic mean roughness of the second area.

2. The non-aqueous electrolyte secondary battery according to claim 1, wherein
Ra1/Ra2 ≥ 1.2 is satisfied.
